# EUROPEAN PATENT SPECIFICATION

(11) **EP 2 316 609 B1**
(45) Date of publication and mention of the grant of the patent: **13.06.2012**
(21) Application number: 09174238.7
(22) Date of filing: 27.10.2009
(51) Int. Cl.: B23Q 1/01, B23Q 1/48, B23Q 1/62

(54) **Multi-spindle machining machine**
Mehrspindel-Arbeitsmaschine
Machine d'usinage à plusieurs axes

(43) Date of publication of application: 04.05.2011
(73) Proprietor: Shenq Fang Yuan Technology Co., Ltd., Taichung 408 (Province of China) (TW)
(72) Inventor: Shih, Cheng Hsiu, 408 Taichung (TW)
(74) Representative: Chaillot, Geneviève

(56) References cited:
- EP-A1- 0 816 012
- EP-A1- 1 380 382
- DE-A1-102005 020 035
- US-A- 4 621 407

## Description

### Field of the Invention

The present invention relates to an automatic machining machine, and more particularly to a multi-spindle machining machine which can lower size and production cost.

### Description of the Prior Art

A conventional lateral machine having an horizontal spindle is known from patent document EP-A-1 380 382.

Another conventional lateral driving device of a machining machine is disposed on one side of a working room, and a vertical driving device is fixed on the lateral device so that a working head move along X axis by using the working head and along Y axis by using the vertical driving device. However, such a machining machine has a large size to increase production cost.

Another conventional lateral device of a machining machine is fixed on a lower side of a working room, and a vertical driving device is mounted on an upper or lower sides so that the lateral driving device carries a workpiece on a carrier to move along X and Y axes, and the vertical driving device drives the carrier or a working head to move along a Z axis. However, such a machining machine is in a large size to increase production cost.

The present invention has arisen to mitigate and/or obviate the afore-described disadvantages.

### SUMMARY OF THE INVENTION

The primary object of the present invention is to provide a multi-spindle machining machine which can lower size and production cost.

A multi-spindle machining machine in accordance with a preferred embodiment of the present invention is defined in appended claim 1.

### BRIEF DESCRIPTION OF THE DRAWINGS

Fig. 1 is a perspective view showing the assembly of a multi-spindle machining machine in accordance with a preferred embodiment of the present invention;
Fig. 2 is a plan view of the multi-spindle machining machine in accordance with the preferred embodiment of the present invention;
Fig. 3 is another plan view of the multi-spindle machining machine in accordance with the preferred embodiment of the present invention;
Fig. 4 is another plan view of the multi-spindle machining machine in accordance with the preferred embodiment of the present invention;
Fig. 5 is a perspective view showing the assembly of the multi-spindle machining machine in accordance with the preferred embodiment of the present invention;
Fig. 6 is an amplified view of lateral and vertical driving devices of the multi-spindle machining machine in accordance with the preferred embodiment of the present invention;
Fig. 7 is a plan view showing the operation of the multi-spindle machining machine in accordance with the preferred embodiment of the present invention;
Fig. 8 is another plan view showing the operation of the multi-spindle machining machine in accordance with the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

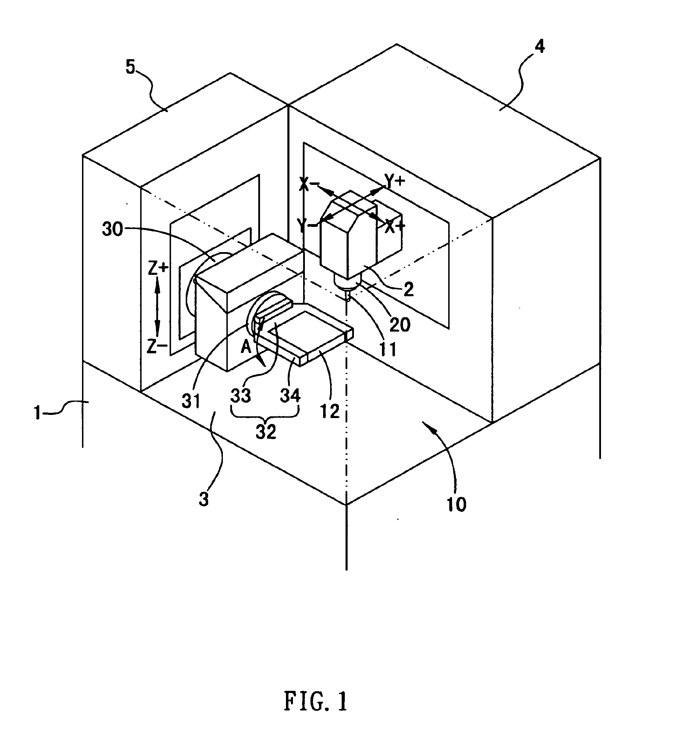

Referring to Figs. 1-4, a multi-spindle machining machine in accordance with a preferred embodiment of the present invention comprises a base 1, a working head 2, a carrier 3, a lateral driving device 4, and a vertical driving device 5, wherein
the base 1 includes a working room 10 to move and rotate a tool 11 and a workpiece 12, the tool 11 is a milling cutter, a drill, and a grinding cutter, etc.

The working head 2 includes a driving spindle 20 to rotably disposed on a lower end thereof, and the lower end of the driving spindle 20 clamps the tool 11 to have a cutting, drilling, and grinding process.

The carrier 3 includes a seat 30, a rotary shaft 31, and a fixing holder 32. The seat 30 is fixed on one side of the working room 10. The rotary shaft 31 is mounted on the seat 30 laterally and allows to drive the seat 30 to rotate in an axial direction (A axis) by using a pneumatic cylinder or servo motor. The fixing holder 32 includes a lateral shank 33 and two positioning rods 34, the lateral shank 33 is connected to the rotary shaft 31, and the two positioning rods 34 vertically extend from two ends of the lateral shank 33 to fix the workpiece 12 thereon, and upper and lower opposite sides of the workpiece 12 are located between the two positioning rods 34. The fixing holder 32 is designed to include different structures based on the workpiece 12. For example, the fixing holder 32 is designed to include an annular fixing casing to match with a circular workpiece 12, and the fixing holder 32 is designed to include a fixing paw or sleeve to engage or insert a cylinder workpiece 12.

The lateral driving device 4 is disposed on the base 1 and located on one side of the working room 10 in a horizontal direction to drive the working head 2 to move in an X axis and a Y axis at the working room 10.

The vertical driving device 5 is disposed on the base 1 and located on another side of the working room 10 in a lateral direction to drive the seat 30 to move in Z axis direction.

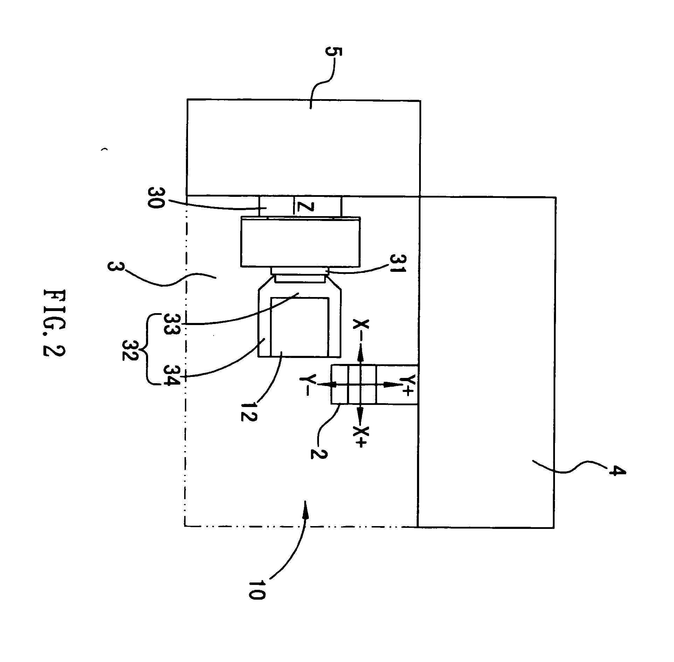

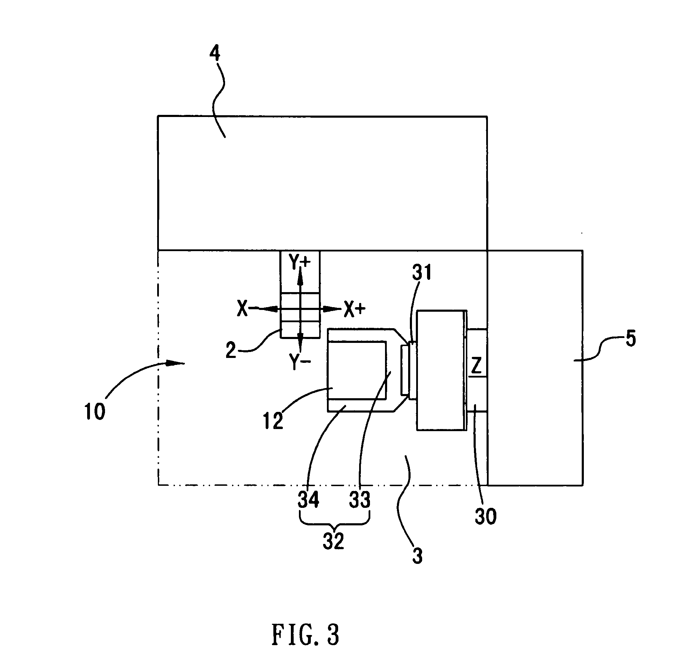

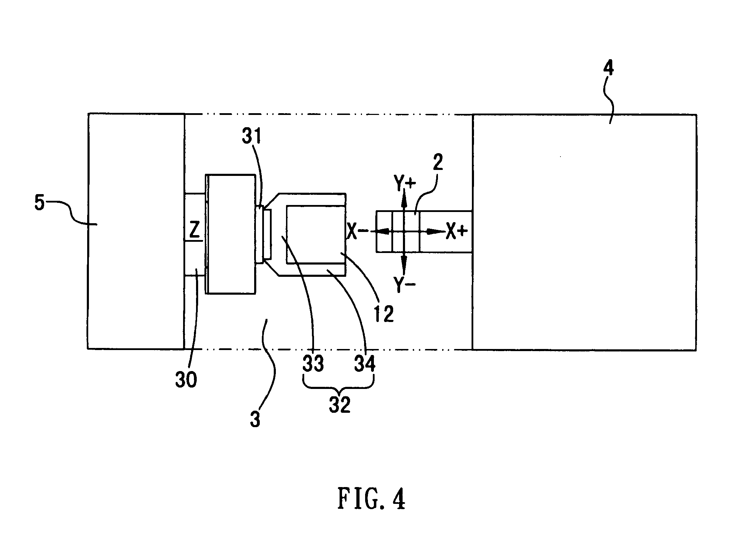

The lateral and vertical driving devices 4, 5 are located on two lateral sides of the working room 10, such as back and right sides of the working room 10 as shown in Figs. 1 and 2, back and left sides of the working room 10 as shown in Fig. 3. Furthermore, the lateral and vertical devices 4, 5 are secured on two opposite sides in a lateral direction of the working room 10, left and right sides of the working room 10 as shown in Fig. 4, or front and rear sides of the working room 10 (not shown).

Therefore, the multi-spindle machining machine of the present invention includes the following advantages:
1. Lowering size, wherein the vertical driving device 5 drives the carrier 3 to move vertically, and the lateral driving device 4 only allows to drive a small size of working head 2 so as to move frontward and backward, leftward and rightward to work the workpiece 12, such that a largest moving travel of the working head 2 is designed to have a predetermined area matching with the size of the workpiece 12, decreasing size of the multi-spindle machining machine. Besides, the carrier 3 is designed to have a predetermined height to match with a working depth of the workpiece 12, therefore a vertical moving distance is equal to a thickness of the workpiece 12, and the carrier 3 can rotate the workpiece 12, such that the size of the multi-spindle machining machine is saved. Also, the lateral and the vertical driving devices 4, 5 are disposed in a lateral direction of the working room 10 to decrease height of the multi-spindle machining machine.
2. Decreasing production cost, wherein the vertical driving device 5 is fixed on a lateral position outside the lateral driving device 4 so as to assemble the multi-spindle machining machine easily and simplify structure.
3. Facilitating double-side working of the workpiece, wherein the rotary shaft 31 of the carrier 3 rotates to actuate the workpiece 21 on the fixing holder 32 to rotate so as to facilitate the three-dimensional and double-side working of the workpiece 12.

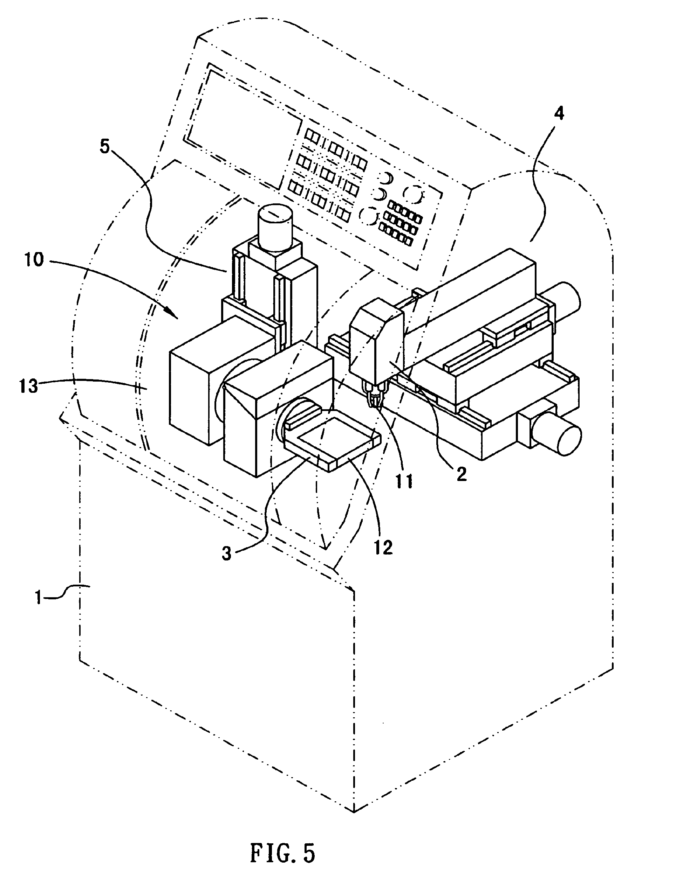

Referring to Fig. 5, the working room 10 includes a chamber with a suitable length, width, and height. The lateral driving device 4 is located on a back side of the chamber, and the vertical driving device 5 is located on a left side of the chamber. The chamber includes a rotary transparent cover 13 therein to monitor a working status of the chamber and to install or remove the workpiece 12.

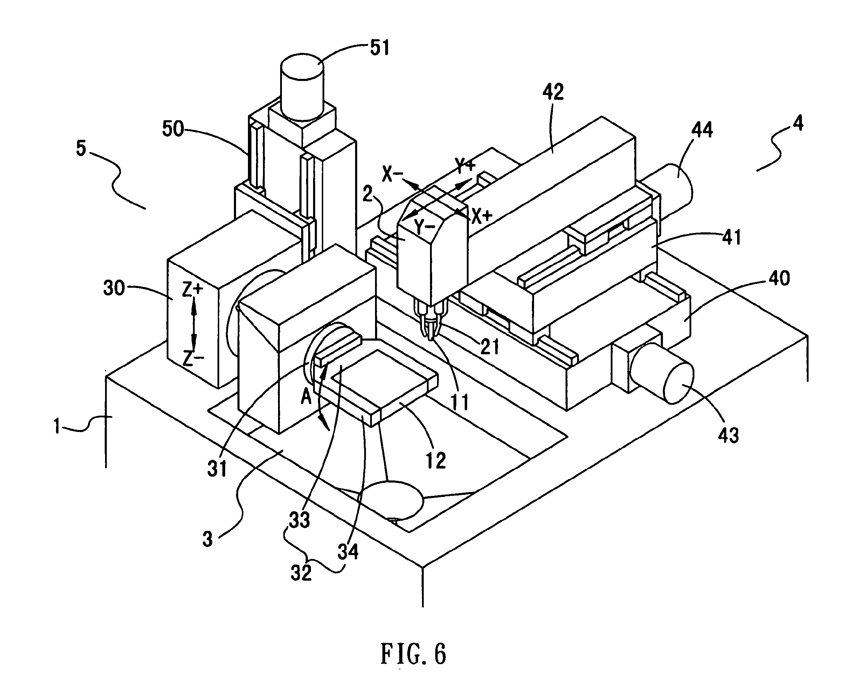

As shown in Fig. 6, the lateral driving device 4 includes a first guiding member 40, a second guiding member 41, a working mount 42, a first diver 43, and a second driver 44. The first guiding member 40 is disposed on the base 1, and the second guiding member 41 is mounted on the first guiding member 40 to move along an X axis. The working mount 42 is secured on the second guiding seat 41 to move alone a Y axis, and the first driver 43 is a servo motor and disposed on the first guiding member 40 to drive the second guiding member 41 to move. The second driver 44 is a servo motor and fixed on the second guiding member 41 to drive the working mount 42 to move. The working head 2 is connected to the working mount 42.

The vertical driving device 5 includes a third guiding member 50 and a third driver 51, the third guiding member 50 is disposed on the base 1, the seat 30 of the carrier 3 is fixed on the third guiding member 50 to move along a Z axis, and the third driver 51 is disposed on the third guiding member 50 to drive the seat to move.

With reference to Fig. 6 the working head 2 includes at least one nozzle 21 to spray cutting oil or air.

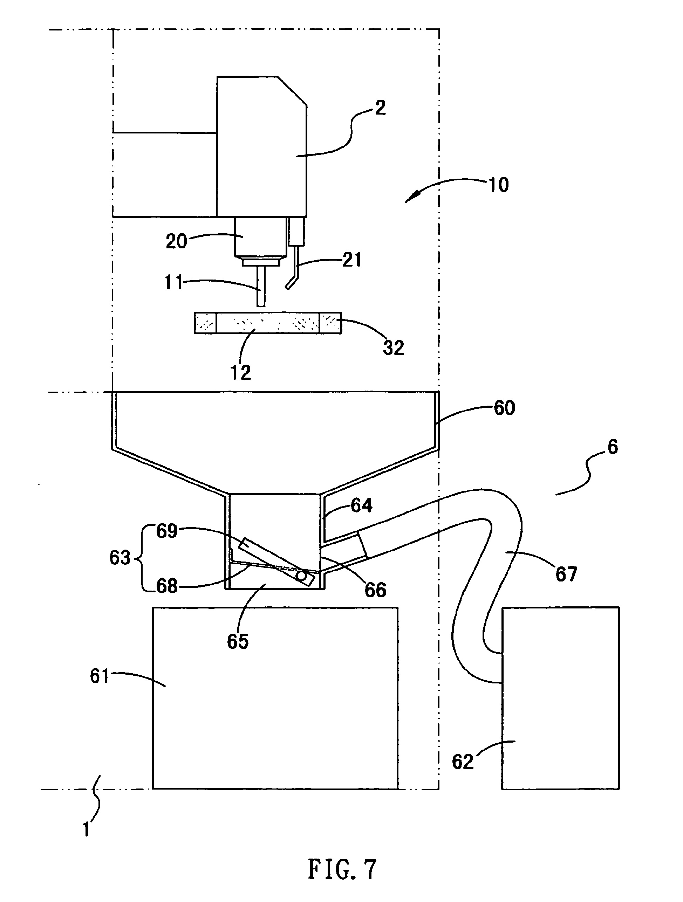

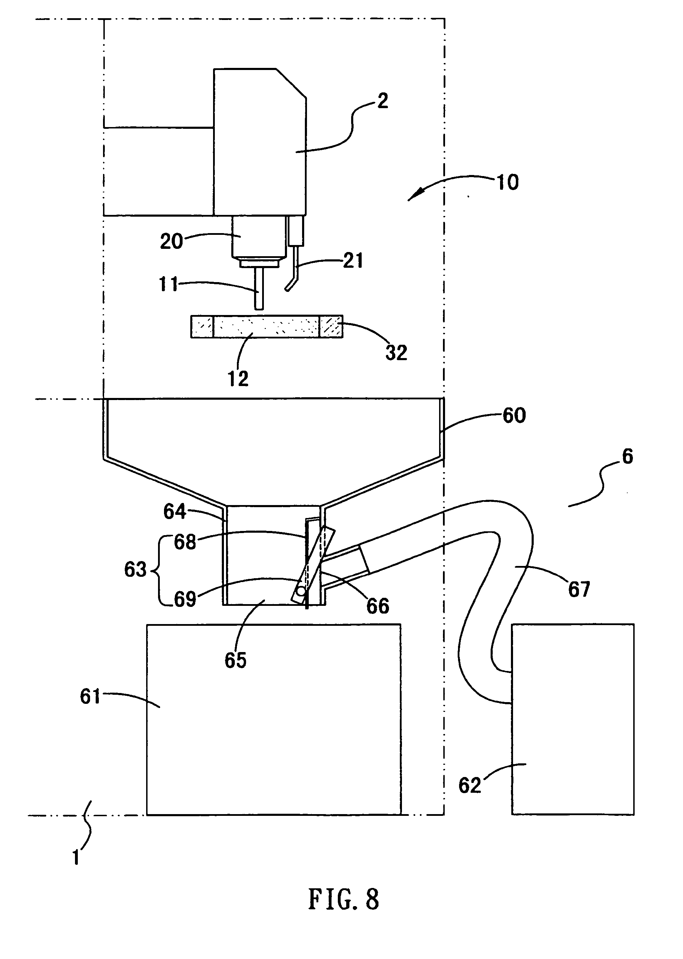

With reference to Figs. 7 and 8, the working room 10 of the base 1 includes a dust collecting mechanism 6 disposed on a lower side thereof to collect chips and cutting oil sprayed from the nozzle 21. The dust collecting mechanism 6 includes a groove 60, a tank 61, a dust collector 62, and a switching device 63, wherein
the groove 60 is disposed below the working room 10 of the base 1, and is formed in a funnel shape to receive the chips and cutting oil falling from the working room 10. The groove 60 includes a pipe 64 communicating therewith and having a first outlet 65 mounted on a bottom portion of the pipe 64 and having a second outlet 66 fixed on a wall of the pipe 64.

The tank 61 is located below the first outlet 65 to receive the cutting oil falling from the first outlet 65.

The dust collector 62 is coupled to the second outlet 66 by using a connecting tube 67 to draw the chips from the pipe 64.

The switching 63 includes a plate member 68 and a controlling stem 69, the plate member 68 is mounted in the pipe 64 to swing to cover the first outlet 65 and the second outlet 66. The controlling stem 69 is mounted on an outer portion of the pipe 64 to drive the plate member 68 to swing.

Referring to Fig. 7, as the controlling stem 69 drives the plate member 68 to cover the first outlet 65, the dust collector 62 is started to draw wind and control the nozzle 21 to stop spraying cutting oil, having a dry cutting process.

As illustrated in Fig. 8, when the controlling stem 69 drives the plate member 68 to cover the second outlet 66, the dust collector 62 is closed automatically to control the nozzle 21 to spray cutting oil, having a wet cutting process.

While we have shown and described various embodiments in accordance with the present invention, it is clear to those skilled in the art that further embodiments may be made without departing from the scope of the present invention, as defined by the appended claims.

## Claims

1. A machining machine to work a workpiece in multiple directions, comprising:
a base (1) including a working room (10) to move and rotate a tool (11) and a workpiece (12);
a working head (2) including a driving spindle (20) rotably disposed on a lower end thereof, and the lower end of the driving spindle (20) clamping the tool (11);
a carrier (3) including a seat (30), a rotary shaft (31), and a fixing holder (32), the seat (30) being fixed on one side of the working room (10), the rotary shaft (31) mounted on the seat (30) laterally and allowing to drive the seat (30) to rotate in an axial direction (A axis), the fixing holder (32) connected to an end portion of the rotary shaft (31) so that the workpiece (12) is fixed to the fixing holder (32);
a lateral driving device (4) disposed on the base (1) and located on one side of the working room (10) in a horizontal direction to drive the working head (2) to move in an X axis and a Y axis at the working room (10);
a vertical driving device (5) disposed on the base (1) and located on another side of the working room (10) in a lateral direction to drive the seat (30) to move in Z axis direction
wherein the lateral driving device (4) includes a first guiding member (40), a second guiding member (41), a working mount (42), a first driver (43), and a second driver (44), the first guiding member (40) is disposed on the base (1), and the second guiding member (41) is mounted on the first guiding member (40) to move along an X axis, the working mount (42) is secured on the second guiding seat (41) to move along a Y axis, and the first driver (43) is disposed on the first guiding member (40) to drive the second guiding member (41) to move, the second driver (44) is fixed on the second guiding member (41) to drive the working mount (42) to move, and the working head (2) is connected to the working mount (42);
a vertical driving device (5) includes a third guiding member (50) and a third driver (51), the third guiding member (50) is disposed on the base (1), the seat (30) of the carrier (3) is fixed on the third guiding member (50) to move along a Z axis, and the third driver (51) is disposed on the third guiding member (50) to drive the seat (30) to move.

2. The multi-spindle machining machine as claimed in claim 1, wherein the lateral driving device (4) and the vertical driving device (5) are located on two abutting sides of the working room (10).

3. The multi-spindle machining machine as claimed in claim 1, wherein the lateral driving device (4) and the vertical driving device (5) are located on two opposites of the working room (10).

4. The multi-spindle machining machine as claimed in claim 1 or 2, wherein the working head (2) includes at least one nozzle (21) to spray cutting oil or air, the multi-spindle machining machine further includes a dust collecting mechanism (6) disposed on a lower side thereof to collect chips and cutting oil sprayed from the nozzle (21), the dust collecting mechanism (6) includes a groove (60), a tank (61), a dust collector (62), and a switching device (63), wherein the groove (60) is disposed below the working room (10) of the base (1), and is formed in a funnel shape to receive the chips and cutting oil falling from the working room (10), the groove (60) includes a pipe (64) communicating therewith and having a first outlet (65) mounted on a bottom portion of the pipe (64) and having a second outlet (66) fixed on a wall of the pipe (64).

5. The multi-spindle machining machine as claimed in claim 1 or 3, wherein the working head (2) includes at least one nozzle (21) to spray cutting oil or air, the multi-spindle machining machine further includes a dust collecting mechanism (6) disposed on a lower side thereof to collect chips and cutting oil sprayed from the nozzle (21), the dust collecting mechanism (6) includes a groove (60), a tank (61), a dust collector (62), and a switching device (63), wherein the groove (60) is disposed below the working room (10) of the base (1), and is formed in a funnel shape to receive the chips and cutting oil falling from the working room (10), the groove (60) includes a pipe (64) communicating therewith and having a first outlet (65) mounted on a bottom portion of the pipe (64) and having a second outlet (66) fixed on a wall of the pipe (64).

6. The multi-spindle machining machine as claimed in claim 4, wherein as a controlling stem (69) drives a plate member (68) to cover the first outlet (65), the dust collector (62) is started to draw wind and control the nozzle (21) to stop spraying cutting oil.

7. The multi-spindle machining machine as claimed in claim 5, wherein as a controlling stem (69) drives a plate member (68) to cover the first outlet (65), the dust collector (62) is started to draw wind and control the nozzle (21) to stop spraying cutting oil.

8. The multi-spindle machining machine as claimed in any of claim 1, 2, 4 or 6, wherein the fixing holder (32) includes a lateral shank (33) and two positioning rods (34), the lateral shank (33) is connected to the rotary shaft (31), and the two positioning rods (34) vertically extend from two ends of the lateral shank (33) to fix the workpiece (12) thereon.

9. The multi-spindle machining machine as claimed in any of claim 1, 3, 5 or 7, wherein the fixing holder (32) includes a lateral shank (33) and two positioning rods (34), the lateral shank (33) is connected to the rotary shaft (31), and the two positioning rods (34) vertically extend from two ends of the lateral shank (33) to fix the workpiece (12) thereon.

## Patentansprüche

1. Mehrspindel-Arbeitsmaschine zum Bearbeiten eines Werkstücks in mehreren Richtungen, umfassend:
einen Fuß (1) einschließlich eines Arbeitsraums (10) zum Bewegen und Drehen eines Werkzeugs (11) und eines Werkstücks (12),
einen Arbeitskopf (2), der eine Antriebsspindel (20) aufweist, die drehbar an einem unteren Ende desselben angeordnet ist, und wobei das untere Ende der Antriebsspindel (20) das Werkzeug (11) einspannt,
einen Träger (3), der eine Aufnahme (30), eine sich drehende Welle (31) und einen Befestigungshalter (32) aufweist, wobei die Aufnahme (30) auf einer Seite des Arbeitsraums (10) befestigt ist, die sich drehende Welle (31) seitlich an der Aufnahme (30) montiert ist und ermöglicht, die Aufnahme (30) anzutreiben, damit sie sich in einer axialen Richtung (A-Achse) dreht, der Befestigungshalter (32) mit einem Endabschnitt der sich drehenden Welle (31) verbunden ist, sodass das Werkstück (12) am Befestigungshalter (32) befestigt ist,
eine seitliche Antriebsvorrichtung (4), die auf dem Fuß (1) angeordnet ist und sich auf einer Seite des Arbeitsraums (10) in einer waagerechten Richtung befindet, um den Arbeitskopf (2) so anzutreiben, dass er sich in einer X-Achse und einer Y-Achse im Arbeitsraum (10) bewegt,
eine senkrechte Antriebsvorrichtung (5), die auf dem Fuß (1) angeordnet ist und sich auf einer anderen Seite des Arbeitsraums (10) in einer seitlichen Richtung befindet, um die Aufnahme (30) so anzutreiben, dass sie sich in Richtung der Z-Achse bewegt,
wobei die seitliche Antriebsvorrichtung (4) ein erstes Führungselement (40), ein zweites Führungselement (41), eine Arbeitshalterung (42), einen ersten Antrieb (43) und einen zweiten Antrieb (44) aufweist, das erste Führungselement (40) auf dem Fuß (1) angeordnet ist und das zweite Führungselement (41) auf dem ersten Führungselement (40) angeordnet ist, um sich entlang einer X-Achse zu bewegen, die Arbeitshalterung (42) auf der zweiten Führungsaufnahme (41) befestigt ist, um sich entlang einer Y-Achse zu bewegen und der erste Antrieb (43) an dem ersten Führungselement (40) angeordnet ist, um das zweite Führungselement (41) anzutreiben, damit es sich bewegt, der zweite Antrieb (44) an dem zweiten Führungselement (41) befestigt ist, um die Arbeitshalterung (42) anzutreiben, damit sie sich bewegt und der Arbeitskopf (2) mit der Arbeitshalterung (42) verbunden ist,
eine senkrechte Antriebsvorrichtung (5) ein drittes Führungselement (50) und einen dritten Antrieb (51) aufweist, das dritte Führungselement (50) auf dem Fuß (1) angeordnet ist, die Aufnahme (30) des Trägers (3) an dem dritten Führungselement (50) befestigt ist, um sich entlang einer Z-Achse zu bewegen und der dritte Antrieb (51) an dem dritten Führungselement (50) angeordnet ist, um die Aufnahme (30) anzutreiben, damit sie sich bewegt.

2. Mehrspindel-Arbeitsmaschine nach Anspruch 1, wobei die seitliche Antriebsvorrichtung (4) und die senkrechte Arbeitsvorrichtung (5) auf zwei aneinandergrenzenden Seiten des Arbeitsraums (10) angeordnet sind.

3. Mehrspindel-Arbeitsmaschine nach Anspruch 1, wobei die seitliche Antriebsvorrichtung (4) und die senkrechte Arbeitsvorrichtung (5) auf zwei gegenüberliegenden Seiten des Arbeitsraums (10) angeordnet sind.

4. Mehrspindel-Arbeitsmaschine nach Anspruch 1 oder 2, wobei der Arbeitskopf (2) mindestens eine Düse (21) zum Versprühen von Schneidöl oder Luft aufweist, die Mehrspindel-Arbeitsmaschine ferner einen Staubsammelmechanismus (6) aufweist, der an einer unteren Seite derselben angeordnet ist, um Späne und Schneidöl, das aus der Düse (21) gesprüht wird, aufzufangen, wobei der Staubsammelmechanismus (6) einen Kanal (60), einen Behälter (61), eine Staubsammelvorrichtung (62) und eine Umstelleinrichtung (63) aufweist, wobei der Kanal (60) unter dem Arbeitsraum (10) des Fußes (1) angeordnet ist und in einer Trichterform geformt ist, um die Späne und das Schneidöl aufzunehmen, die aus dem Arbeitsraum (10) fallen, der Kanal (60) ein Rohr (64) aufweist, das damit in Verbindung steht und einen ersten Auslass (65) aufweist, der an einem unteren Abschnitt des Rohrs (64) angebracht ist, und einen zweiten Auslass (66) aufweist, der an einer Wand des Rohrs (64) befestigt ist.

5. Mehrspindel-Arbeitsmaschine nach Anspruch 1 oder 3, wobei der Arbeitskopf (2) mindestens eine Düse (21) zum Versprühen von Schneidöl oder Luft aufweist, die Mehrspindel-Arbeitsmaschine ferner einen Staubsammelmechanismus (6) aufweist, der an einer unteren Seite derselben angeordnet ist, um Späne und Schneidöl, das aus der Düse (21) gesprüht wird, aufzufangen, wobei der Staubsammelmechanismus (6) einen Kanal (60), einen Behälter (61), eine Staubsammelvorrichtung (62) und eine Umstelleinrichtung (63) aufweist, wobei der Kanal (60) unter dem Arbeitsraum (10) des Fußes (1) angeordnet ist und in einer Trichterform geformt ist, um die Späne und das Schneidöl aufzunehmen, die aus dem Arbeitsraum (10) fallen, der Kanal (60) ein Rohr (64) aufweist, das damit in Verbindung steht und einen ersten Auslass (65) aufweist, der an einem unteren Abschnitt des Rohrs (64) angebracht ist, und einen zweiten Auslass (66) aufweist, der an einer Wand des Rohrs (64) befestigt ist.

6. Mehrspindel-Arbeitsmaschine nach Anspruch 4, wobei, wenn ein Steuerstab (69) ein Plattenelement (68) antreibt, um den ersten Auslass (65) abzudecken, die Staubsammelvorrichtung (62) gestartet wird, um Luft anzusaugen und die Düse (21) so zu steuern, dass sie kein Schneidöl mehr versprüht.

7. Mehrspindel-Arbeitsmaschine nach Anspruch 5, wobei, wenn ein Steuerstab (69) ein Plattenelement (68) antreibt, um den ersten Auslass (65) abzudecken, die Staubsammelvorrichtung (62) gestartet wird, um Luft anzusaugen und die Düse (21) so zu steuern, dass sie kein Schneidöl mehr versprüht.

8. Mehrspindel-Arbeitsmaschine nach einem der Ansprüche 1, 2, 4 oder 6, wobei der Befestigungshalter (32) ein Querteil (33) und zwei Positionierstäbe (34) aufweist, das Querteil (33) mit der sich drehenden Welle (31) verbunden ist und die beiden Positionierstäbe (34) von zwei Enden des Querteils (33) aus senkrecht verlaufen, um das Werkstück (12) daran zu fixieren.

9. Mehrspindel-Arbeitsmaschine nach einem der Ansprüche 1, 3, 5 oder 7, wobei der Befestigungshalter (32) ein Querteil (33) und zwei Positionierstäbe (34) aufweist, das Querteil (33) mit der sich drehenden Welle (31) verbunden ist und die beiden Positionierstäbe (34) von zwei Enden des Querteils (33) aus senkrecht verlaufen, um das Werkstück (12) daran zu fixieren.

## Revendications

1. Machine d'usinage à broches multiples pour travailler une pièce à travailler dans de multiples directions, comprenant :
une base (1) comprenant une zone de travail (10) pour déplacer et faire tourner un outil (11) et une pièce à travailler (12) ;
une tête de travail (2) comprenant une broche d'entraînement (20) disposée de manière rotative sur une extrémité inférieure de celle-ci, et l'extrémité inférieure de la broche d'entraînement (20) serrant l'outil (11) ;
un support (3) comprenant un siège (30), un arbre tournant (31) et un support de fixation (32), le siège (30) étant fixé sur un côté de la zone de travail (10), l'arbre tournant (31) étant monté sur le siège (30) latéralement et permettant d'amener le siège (30) à tourner dans une direction axiale (axe A), le support de fixation (32) étant relié à une partie d'extrémité de l'arbre tournant (31) de telle sorte que la pièce à travailler (12) est fixée sur le support de fixation (32) ;
un dispositif d'entraînement latéral (4) disposé sur la base (1) et situé sur un côté de la zone de travail (10) dans une direction horizontale pour amener la tête de travail (2) à se déplacer selon un axe X et un axe Y au niveau de la zone de travail (10) ;
un dispositif d'entraînement vertical (5) disposé sur la base (1) et situé sur un autre côté de la zone de travail (10) dans une direction latérale pour amener le siège (30) à se déplacer dans une direction d'axe Z
le dispositif d'entraînement latéral (4) comprenant un premier élément de guidage (40), un deuxième élément de guidage (41), une monture de travail (42), une première commande (43) et une deuxième commande (44), le premier élément de guidage (40) étant disposé sur la base (1), et le deuxième élément de guidage (41) étant monté sur le premier élément de guidage (40) pour se déplacer le long d'un axe X, la monture de travail (42) étant fixée sur le second siège de guidage (41) pour se déplacer le long d'un axe Y, et la première commande (43) étant disposée sur le premier élément de guidage (40) pour amener le deuxième élément de guidage (41) à se déplacer, la deuxième commande (44) étant fixée sur le deuxième élément de guidage (41) pour amener la monture de travail (42) à se déplacer, et la tête de travail (2) étant reliée à la monture de travail (42) ;
un dispositif d'entraînement vertical (5) comprenant un troisième élément de guidage (50) et une troisième commande (51), le troisième élément de guidage (50) étant disposé sur la base (1), le siège (30) du support (3) étant fixé sur le troisième élément de guidage (50) pour se déplacer le long d'un axe Z, et la troisième commande (51) étant disposée sur le troisième élément de guidage (50) pour amener le siège (30) à se déplacer.

2. Machine d'usinage à broches multiples selon la revendication 1, dans laquelle le dispositif d'entraînement latéral (4) et le dispositif d'entraînement vertical (5) sont situés sur deux côtés en butée l'un contre l'autre de la zone de travail (10).

3. Machine d'usinage à broches multiples selon la revendication 1, dans laquelle le dispositif d'entraînement latéral (4) et le dispositif d'entraînement vertical (5) sont situés sur deux côtés opposés de la zone de travail (10).

4. Machine d'usinage à broches multiples selon l'une des revendications 1 ou 2, dans laquelle la tête de travail (2) comprend au moins une buse (21) pour pulvériser de l'huile de coupe ou de l'air, la machine d'usinage à broches multiples comprenant en outre un mécanisme de collecte de poussière (6) disposé sur un côté inférieur de celle-ci pour collecter des copeaux et l'huile de coupe pulvérisée par la buse (21), le mécanisme de collecte de poussière (6) comprenant une rainure (60), un réservoir (61), un collecteur de poussière (62) et un dispositif de commutation (63), la rainure (60) étant disposée au-dessous de la zone de travail (10) de la base (1), et étant formée selon une forme d'entonnoir pour recevoir les copeaux et l'huile de coupe tombant de la zone de travail (10), la rainure (60) comprenant un tuyau (64) communiquant avec celle-ci et ayant une première sortie (65) montée sur une partie inférieure du tuyau (64) et ayant une seconde sortie (66) fixée sur une paroi du tuyau (64).

5. Machine d'usinage à broches multiples selon l'une des revendications 1 ou 3, dans lequel la tête d'usinage (2) comprend au moins une buse (21) pour pulvériser de l'huile ou de l'air de coupe, la machine d'usinage à broches multiples comprenant en outre un mécanisme de collecte de poussière (6) disposé sur un côté inférieur de celle-ci pour collecter des copeaux et l'huile de coupe pulvérisée par la buse (21), le mécanisme de collecte de poussière (6) comprenant une rainure (60), un réservoir (61), un collecteur de poussière (62) et un dispositif de commutation (63), la rainure (60) étant disposée au-dessous de la zone de travail (10) de la base (1), et étant formée selon une forme d'entonnoir pour recevoir les copeaux et l'huile de coupe tombant de la zone de travail (10), la rainure (60) comprenant un tuyau (64) communiquant avec celle-ci et ayant une première sortie (65) montée sur une partie inférieure du tuyau (64) et ayant une seconde sortie (66) fixée sur une paroi du tuyau (64).

6. Machine d'usinage à broches multiples selon la revendication 4, dans laquelle, alors qu'une tige de commande (69) amène un élément de plaque (68) à recouvrir la première sortie (65), le collecteur de poussière (62) est démarré pour aspirer l'air et amener la buse (21) à arrêter de pulvériser de l'huile de coupe.

7. Machine d'usinage à broches multiples selon la revendication 5, dans laquelle, alors qu'une tige de commande (69) amène un élément de plaque (68) à recouvrir la première sortie (65), le collecteur de poussière (62) est démarré pour aspirer l'air et amener la buse (21) à arrêter de pulvériser de l'huile de coupe.

8. Machine d'usinage à broches multiples selon l'une des revendications 1, 2, 4 ou 6, dans laquelle le support de fixation (32) comprend une tige latérale (33) et deux tiges de positionnement (34), la tige latérale (33) étant reliée à l'arbre tournant (31), et les deux tiges de positionnement (34) s'étendant verticalement à partir de deux extrémités de la tige latérale (33) pour fixer la pièce à travailler (12) sur celle-ci.

9. Machine d'usinage à broches multiples selon l'une quelconque des revendications 1, 3, 5 ou 7, dans laquelle le support de fixation (32) comprend une tige latérale (33) et deux tiges de positionnement (34), la tige latérale (33) étant reliée à l'arbre rotatif (31), et les deux tiges de positionnement (34) s'étendant verticalement à partir de deux extrémités de la tige latérale (33) pour fixer la pièce à travailler (12) sur celle-ci.
